# EUROPEAN PATENT APPLICATION

(11) **EP 4 276 334 A1**
(43) Date of publication of application: **15.11.2023**
(21) Application number: 22172247.3
(22) Date of filing: 09.05.2022
(51) Int. Cl.: F16H 61/00, F16H 57/00

(54) **A VALVE UNIT FOR A GEARBOX CONTROL UNIT**

(71) Applicant: ZF CV Systems Europe BV, 1170 Brüssel (BE)
(72) Inventor: SALATYCKI, Mateusz, 45-223 Opole (PL); SOCHA, Przemyslaw, 53-311 Wroclaw (PL); SUSKI, Bartosz, 54-129 Wroclaw (PL)
(74) Representative: Ohlendorf, Henrike

(57) **Abstract**

The invention relates to a valve unit (10) of a commercial vehicle, comprising a valve block (11) for carrying a plurality of valves (20, 24), a plurality of electrically actuated valves (20, 24), and a mounting member (14) configured to engage the valve block (11). According to the invention, the valve unit (10) has a damping device (17) for damping oscillation of at least a first valve (20.1) in at least a first spatial direction, the damping device (17) having a spring element (32) for vibration-conductive coupling to said first valve (20.1) and a mass element (34) for oscillating at a frequency associated with the resonant frequency of said first valve (20.1). The invention further relates to a gearbox control unit (1) having such a valve unit (10) and to the use of such a damping device (17) and a method for damping oscillation of a valve unit (10).

## Description

The invention relates to a valve unit for a gearbox control unit of a commercial vehicle, said gearbox control unit comprising a valve block for carrying a plurality of valves, a plurality of electrically actuated valves, and a mounting member configured to engage the mounting-interface for coupling the plurality of valves to the valve block.

Valve units according to the aforementioned type are used in transmission of in personal vehicles or commercial vehicles, in particular in automated manual transmission. Automated manual transmission can be automatic or semiautomatic and can be activated by different actuators. In the commercial vehicle industry said actuators may be provided by valve units communicating with gearbox control units.

During operation of the vehicle, the valve unit is exposed to vibrations affecting sensitive electronic parts of said valve unit. Such sensitive electronic parts may be for example valves such as solenoid valves. Violent vibrations can cause breakage of electric lines and thus reduce service life and increase failure prone of automated manual transmission activated by the valve unit. Therefore, there is a need to avoid vibrations and unwanted sound emissions acting on the valve unit.

In the prior art different techniques for vibration reducing attachment of valves are known for vibration damping. There are for example spring-biased u-plates for attachment of the solenoid valves to the valve block known in the art. The described solutions, however, focus on low-vibration attachment but do not provide active or passive damping mechanisms.

Therefore, it is an object of the present invention to increase service life and improve failure prone of a valve unit. In particular, it is an object of the present invention to reduce vibration affecting the valves of a valve unit.

According to a first aspect of the invention, the problem is solved by a damping device for damping oscillation of at least a first valve of the plurality of valves in at least a first spatial direction. The damping device has a spring element for vibration-conductive coupling to said first valve and a mass element for oscillating at a frequency associated with the resonant frequency of said first valve. Damping causes energy dissipation and has a secondary effect on natural frequency. Thus, the damping device reduces violent vibrations acting on said first valve.

Preferably, the damping device is a passive damping device. Passive damping is known in the art to reduce vibrations of machining tools. Because many types of damping systems have inherent resonances, they are primarily effective at frequencies higher than 4 Hz. Thus, on the one hand the drawback with the passive damping system is that it is adjusted to damp out vibrations in one restricted frequency range. On the other hand, passive vibration dampers also tend to have trouble compensating for vibrations that occur in more than one direction - in other words, they are most effective for vibrations that occur only in the X, Y, or Z direction, and less so for vibrations that occur in multiple directions simultaneously. However, the inventors advantageously recognized that there are in particular vibrations in one defined frequency range causing breakage and damage of the respective valve. Further, there may be at least a first spatial direction of vibrations which particular results in damage of the respective valve. Thus, a passive damping only of said defined frequency range in at least a first direction already provides sufficient protection of the valve unit against violent vibrations.

In that regard, the invention recognize that every object on a flexible support, e.g. a spring element has a fundamental natural frequency. By having a damping device including a spring element forming the flexible support and a mass element, the natural frequency can be modulated, since the mass element and spring element stiffness dictate a natural frequency of the system. According to the present invention, the natural frequency of the damping device is modulated such that at least the mass element oscillates at a frequency associated to the resonant frequency of said first valve. Such a damping device can be used to effectively provide a passive damping of at least the first valve in the first spatial direction.

It is further preferred, that the damping device further has a damping element associated to the spring element, the damping element being configured for dissipating energy created by the motion of the mass element.

Preferably, the damping device is configured for damping the first modal frequency of the oscillation of the first valve. The inventors advantageously recognized that it is in particular the first modal frequencies causing breakage and damage of the respective valve and thus a damping of the first modal frequency provides sufficient protection of the valve unit against violent vibrations.

In a preferred embodiment, the spring element and the damping element are integrally formed by a device body. Thus, a more compact damping device is suggested, wherein the mass element stiffness and spring element stiffness are provided by a single device body.

Preferably, the spring element and the mass element are integrally formed by a device body. Thus, a more compact damping device is suggested, wherein the mass element stiffness and spring element stiffness are provided by a single device body.

It is preferred, that the device body has a proximal section defining the spring element and/or the damping element. Preferably, the device body has a distal section facing away from the first valve and defining the mass element. Thus, the proximal section defines a flexible support and may further provide associated damping. Furthermore, the proximal section is configured for directly or indirectly vibration-conductive coupling to the first valve. Thereby, the proximal section allows the distal section to oscillate at a frequency associated with the resonant frequency of said first valve for passive damping of said first valve. It will be understood that the proximal section and the distal section may be provided either by positive substance jointing of said parts or by a heterogeneous structure of said device body.

It is further preferred, that the device body is formed as a plate having a plate body defining said proximal section and a free oscillating distal section. Thus, the device body is simple to manufacture and a cost efficient damping device is provided.

In a further preferred embodiment, the device body has a spring characteristic defining the spring element and a damping characteristic defining the damping element. Further, the device body has a total mass defining the mass element. The inventors recognized that even the spring characteristic and the damping characteristic of a homogeneous part, e.g. the device body is sufficient to provide a flexible support thereby allowing the damping device to oscillate at a natural frequency. By said spring characteristics and the total mass of said device body the natural frequency can be modulated respectively.

Preferably, the spring element of the damping device is coupled in a vibration-conductive manner to said first valve by direct attachment to the valve block or the first valve or the mounting member. Thus, the damping device is securely attached and at least indirectly coupled to the first valve in a vibration-conductive manner.

Preferably, the mass element has a lower weight than the first valve and/or the valve block. The inventors recognized that for passive damping a mass element having a lower mass when compared to the first valve already provides a sufficient damping. Thus, the total weight of the valve unit is only slightly increased by the damping device.

In a preferred embodiment, the damping device comprises a first tuned mass damper for damping oscillation of the first valve in the first spatial direction, the first tuned mass damper having the spring element and the mass element. A tuned mass damper, also known as a harmonic absorber or seismic damper, is a device mounted in structures to reduce mechanical vibrations. They use a comparatively lightweight component to reduce the vibration of a system so that its worst-case vibrations are less intense. Tuned mass dampers increase the structural damping of structures and thus reduce resonance vibrations. In detail, tuned mass dampers are tuned to the structure to be settled in order to reduce resonance vibrations. Thereby the oscillation frequency of the tuned mass damper is tuned to be similar to the resonant frequency of the object it is mounted to, and reduces the object's maximum amplitude while weighing very much less than it.

Preferably, the tuned mass damper is a passive tuned mass damper. Passive tuned mass dampers are a proven means of reducing unwanted vibrations. Passive tuned mass dampers are a cost-effective and reliable solution for reducing vibrations in a valve unit.

Preferably, the tuned mass damper further comprises the damping element. By a simple tuned mass damper without significant damping provided by a damping element at least the most disturbing frequency mode, the so called "eigenmode" is cancelled. However, said eigenmode are converted into two new disturbances having a different frequency but a similar vibration level. By providing a tuned mass damper having a damping element, the disturbing frequency mode can be calmed in a broad frequency range.

In a further preferred embodiment, the spring element is a first spring element and the mass element is a first mass element. The valve unit preferably comprises a second tuned mass damper for damping vibrations in a second spatial direction. The second tuned mass damper has a second spring element configured for vibration-conductive coupling to a second valve of the plurality of valves and a second mass element for oscillating in a second spatial direction. Preferably, the damping element is a first damping element and the second tuned mass damper further comprises a second damping element. The valve unit preferably comprises a third tuned mass damper for damping vibrations in a third spatial direction. The third tuned mass damper has a third spring element configured for vibration-conductive coupling to a third valve of the plurality of valves and a third mass element for oscillating in a third spatial direction. Preferably, the damping element is a first damping element and the third tuned mass damper further comprises a third damping element.

Preferably, the damping device has natural frequency in a range of 300Hz-3000Hz.

According to a second aspect of the invention, the above-mentioned problem is solved by gearbox control unit of a commercial vehicle. The gearbox control unit comprises an electronic control unit for providing electric control signals, and an electrical actuated valve unit in signal communication with the control unit. The valve unit is configured for providing control pressure to a gearbox, wherein the valve unit is formed in accordance with the first aspect of the present invention.

It shall be understood that the valve unit according to the first aspect of the invention and the gearbox control unit according to the second aspect of the invention have similar and identical preferred embodiments which are in particular described in the dependent claims. In so far, reference is made to the above description of the first aspect of the invention and the preferred features and benefits are fully incorporated herein.

According to a second aspect of the invention, the above-mentioned problem is solved by using a damping device for damping the oscillation of a valve unit for a gearbox control unit of a commercial vehicle, wherein the damping device is configured for damping at least a first valve of a plurality of valves of the valve unit in at least a first spatial direction. The damping device is defined by a spring element for vibration-conductive coupling to said first valve and by a mass element for oscillating at a frequency associated to the resonant frequency of said first valve.

It shall be understood that the valve unit according to the first aspect of the invention and the use of a damping device for damping the oscillation of such a valve unit according to the third aspect of the invention have similar benefits and identical preferred embodiments which are in particular described in the dependent claims. In so far, reference is made to the above description of the first aspect of the invention and the preferred features and benefits are fully incorporated herein.

According to a fourth aspect of the invention, the above-mentioned problem is solved by a method for damping the oscillation of a valve unit for a gearbox control unit of a commercial vehicle. The method comprises the steps:
- providing a damping device configured for damping at least a first valve of a plurality of valves of the valve unit in at least a first spatial direction, wherein the damping device is defined by a spring element and a mass element,
- coupling the spring element of the damping device to said first valve of the valve unit in a vibration-conductive manner, and
- oscillating of the mass element at a frequency associated with the resonant frequency of said first valve.

It shall be understood that the valve unit according to the first aspect of the invention and the method for damping the oscillation of such a valve unit according to the third aspect of the invention have similar benefits and identical preferred embodiments which are in particular described in the dependent claims. In so far, reference is made to the above description of the first aspect of the invention and the preferred features and benefits are fully incorporated herein.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth. In the accompanying drawings:
- Fig. 1:: shows a preferred embodiment of a gearbox control unit comprising a valve unit according to the concept of the invention in a perspective view;
- Fig. 2:: shows a valve unit for the gearbox control unit shown in Fig. 1 according to a first embodiment in a perspective view;
- Fig. 3:: shows a valve unit for the gearbox control unit shown in Fig. 1 according to a first embodiment in a perspective view;
- Fig. 4: shows a schematic illustration of a damping device according to a first embodiment for a valve unit according to Fig. 2 or 3;
- Fig. 5a:: shows a schematic diagram of the oscillation of the valve unit according to Fig. 2 or 3;
- Fig. 5b:: shows a schematic illustration of the operating mode of a damping device for the valve unit according to Fig. 2 or 3;
- Fig. 6:: shows a schematic illustration of a damping device according to a second embodiment for a valve unit according to Fig. 2 or 3;
- Fig. 7:: shows a schematic illustration of a damping device according to a third embodiment for a valve unit according to Fig. 2 or 3; and
- Fig. 8: shows a schematic illustration of a damping device according to a fourth embodiment for a valve unit according to Fig. 2 or 3.

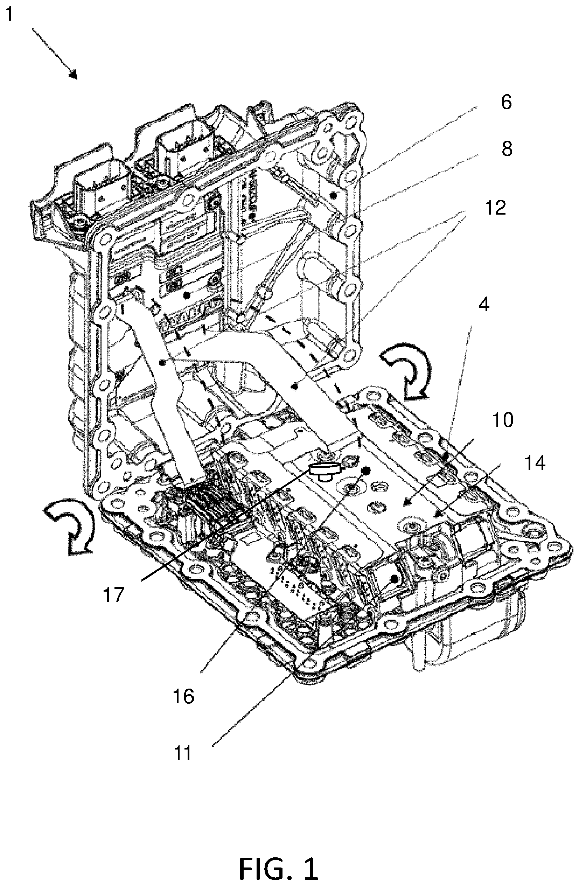

Fig. 1 shows a gearbox control unit 1 for a commercial vehicle. The gearbox control unit 1 comprises a housing section 4. The housing section 4 is configured to be attached to a gearbox of a vehicle (not shown). The gearbox control unit 1 furthermore comprises a top cover 6. The top cover 6 is releasable attached to the housing section 4. A valve unit 10 is accommodated within said housing section 4. In the top cover 6, an electronic control unit 8 is accommodated.

The valve unit 10 comprises a valve block 11. The valve unit 10 furthermore comprises a fixation plate assembly 14 defining a fixation member. The fixation plate assembly 14 comprises a fixation plate 16. Attached to the fixation plate 16 is a flexible printed circuit 12. The gearbox control unit 1 furthermore comprises a second flexible printed circuit 12 connecting the top cover 6 with the housing section 4.

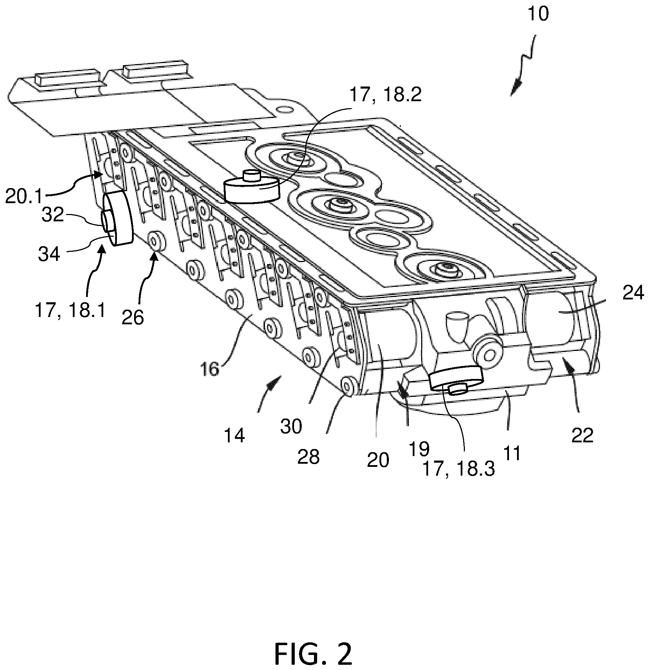

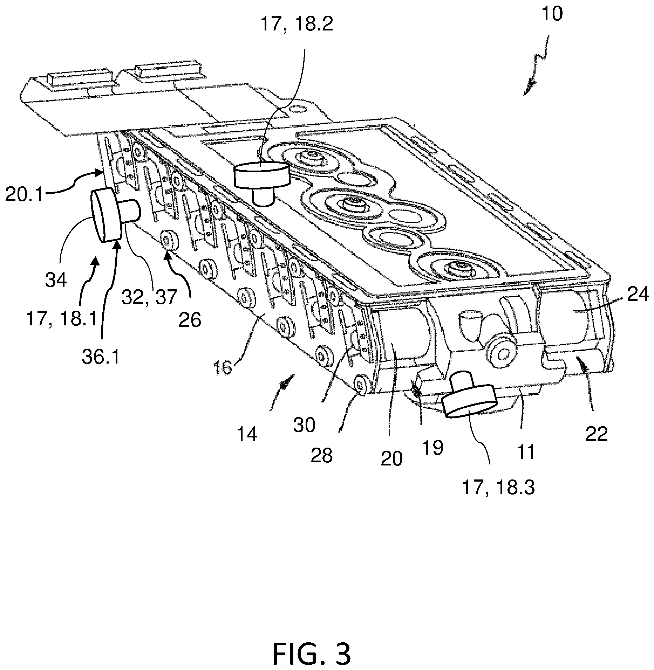

The exact arrangement of the valve unit 10 can better be seen in Fig. 2 and 3. The valve unit 10 comprises the valve block 11 with a first row 19 of solenoid valves 20, and a second row 22 of solenoid valves 24. The first and second rows 19, 22 of solenoid valves 20, 24 are arranged on opposite sides of the valve block 11 and seated in respective recesses of the valve block 11.

For clamping the solenoid valves 20 in the first row 19 against the valve block 11, a fixation plate assembly 14 is provided. The fixation plate 16 comprises solenoid openings 30 through which the electrical terminal (not shown) is accessible. The fixation plate 16 further comprises a plurality of through holes 26 (only one shown with reference sign) which are provided for receiving a respective screw 28 (again only one shown with reference sign) which is positionable through the through hole 26 and can be screwed into a respective (not shown) screw threaded bore in the valve block 11.

In Fig. 2, the valve unit 10 comprises a damping device 17 which comprises a first tuned mass damper 18.1 for damping oscillation of a first valve 20.1 of the solenoid valves 20 of the first row 19 in a first spatial direction. The first tuned mass damper 18.1 comprises a spring element 32 and a mass element 34. The spring element 32 is configured for vibration-conductive coupling to said first valve 20.1 and the mass element 34 is configured for oscillating at a frequency associated with the resonant frequency of said first valve 20.1. In the present embodiment, the spring element 32 is provided by a screw attaching the mass element 34 to a mounting member provided by the fixation plate 16 and to the first valve 20.1 coupled therewith. The mass element 34 is provided by a plate.

The damping device 17 further comprises a second tuned mass damper 18.2 for damping oscillation in a second spatial direction. The second tuned mass damper 18.2 is formed in accordance with the first tuned mass damper 18.1. The damping device 17 further comprises a third tuned mass damper 18.3 configured for damping oscillation in a third spatial direction. The third tuned mass damper is formed in accordance with the first tuned mass damper 18.1. The respective parts of the tuned mass dampers are only provided with reference signs with regard to the first tuned mass damper 18.1

It will be understood that the first tuned mass damper 18.1, the second tuned mass damper 18.2 and the third tuned mass damper 18.3 do not only damp the oscillation of the first valve 20.1 of the valves 20 of the first row 19. The damping device 17 according to the present embodiment is configured for damping oscillation of each of the valves 20 of the first row 19 and the oscillation of each of the valves 24 of the second row 22. By having three tuned mass dampers 18.1, 18.2, and 18.3, oscillation in three spatial directions is damped by the damping device 17.

The embodiment shown in Fig. 3 differs from the embodiment shown in Fig. 2 by the configuration of the damping device 17. Reference is made to the above description of the valve unit 10 according to Fig. 2and in particular to the description of the valve block 11, the valve plate assembly 16 and the first and second row 19, 22 of valves 20, 24. Similar parts are provided with the same reference signs.

As previously described with reference to Fig. 2, also the damping device 17 shown in Fig. 3 comprises a first tuned mass damper 18.1, a second tuned mass damper 18.2 and a third tuned mass damper 18.3 for damping oscillation of the valves 20 of the first row 19 and the valves 22 of the second row 24 in three spatial directions.

Contrary to the embodiment shown in Fig. 2, the first tuned mass damper 18.1 comprises a first device body 36.1, wherein the spring element 32 and the mass element 34 are provided by said device body 36.1. In addition, the first tuned mass damper 18.1 further comprises a damping element 37 which is also provided by the device body 36.1. Thus, the spring element 32, the mass element 34 and the damping element 37 are integrally formed by the first device body 36.1.

The second tuned mass damper 18.2 and the third tuned mass damper 18.3 are formed in accordance with the first tuned mass damper 18.1, wherein the respective parts of the tuned mass dampers are only provided with reference signs with regard to the first tuned mass damper 18.1. Insofar, reference is made to the description of the first tuned mass damper 18.1.

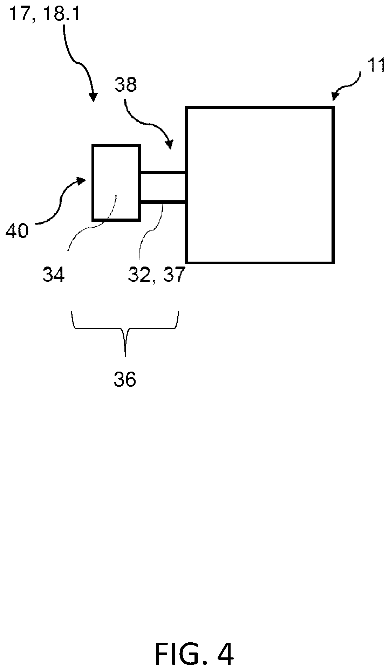

The tuned mass damper 18.1 is shown schematically in more detail in Fig. 4. The damping device 17 comprises a first tuned mass damper 18.1. The damping device 17 comprises a device body 36 having a proximal section 38 and a distal section 40. The proximal section 38 is configured for vibration-conductive coupling to the valve block 11. The spring element 32 and the damping element 37 are provided by the proximal section 38 of the device body 36. The mass element 34 is provided by the distal section 40 of the device body 36. The mass element 34 is integrally formed with the spring element 32 and the damping element 37. The device body 36 may be coupled to the valve block 11 by any suitable means, as for example a screw connection, by means of adhesive or magnetically.

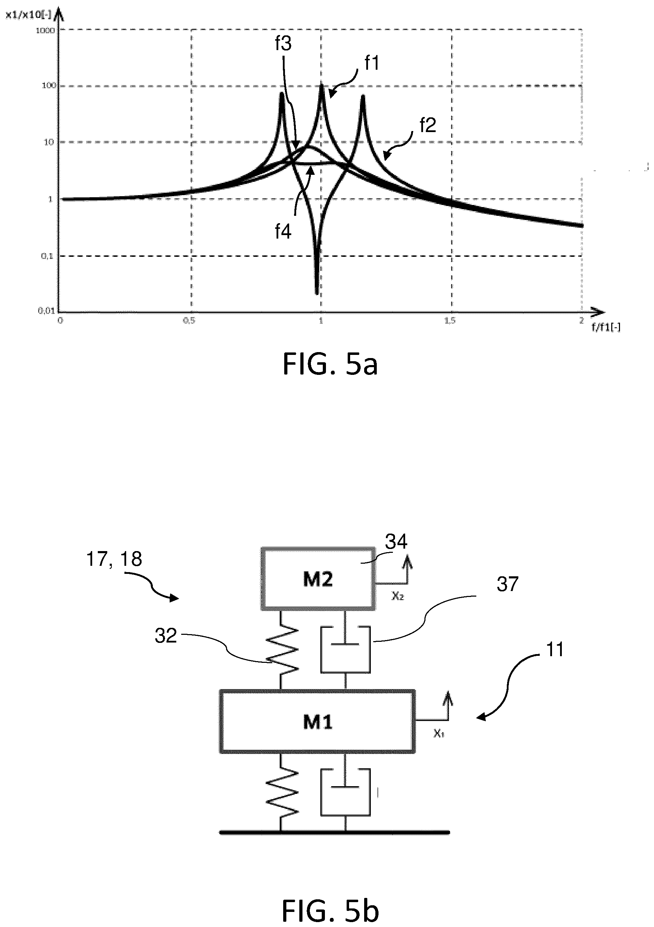

The damping behavior of a damping device 17 having a tuned mass damper 18 is schematically illustrated in Fig. 5a and the working principle of a tuned mass damper 18 is schematically 5b by means of a two-mass-spring-damper-system. The damping device 17 having the tuned mass damper 18 comprises a spring element 32 and a damping element 37 coupled to a mass element 34. The spring element 32 and the damping element 37 are shown in parallel configuration. Reference is made to Figs. 2 to 4 showing embodiments of the damping device 17. The mass element 34 is coupled to the valve block 11 by means of the spring element 32 and the damping element 37. Thereby the damping device 17 having the tuned mass damper 18 is indirectly coupled to the first valve 20.1 (not shown, cf. Fig. 2) in a vibration-conductive manner. The oscillation of the first valve 20.1 (not shown, cf. Fig. 2) is transmitted via the valve block 11 to the mass element 34 by vibration-conduction coupling via the spring element 32. The damping element 37 at the same time dissipates energy created by the movement of the mass element 34.

Fig. 5a shows the calculated movement of the valve block 11 and the valves 20, 24 (not shown, cf. Fig. 2) with respect to the frequency of the excitation force for different properties of the damping device 17. Depending on the configuration of the damping device 17, the vibrations are reduced by an order of magnitude. As indicated in Fig. 5a, the disturbing eigenmode f1 shows a single peak. In the case of low damping by the damping element 37 or in the absence of any damping element in Fig. 5b the disturbing eigenmode f1 is cancelled but two new disturbances right and left to the original one arise that have a similar vibration level as indicated by f2. By increasing the damping by the damping element 37, the disturbing vibration of the valve block 11 (not shown, cf. Fig. 2) can be calmed in a broad frequency range as indicated by f3. Adapting the mass element 34 and spring element 32 stiffness allows a further decrease of vibration level or shifting the curve, respectively as indicated by f4.

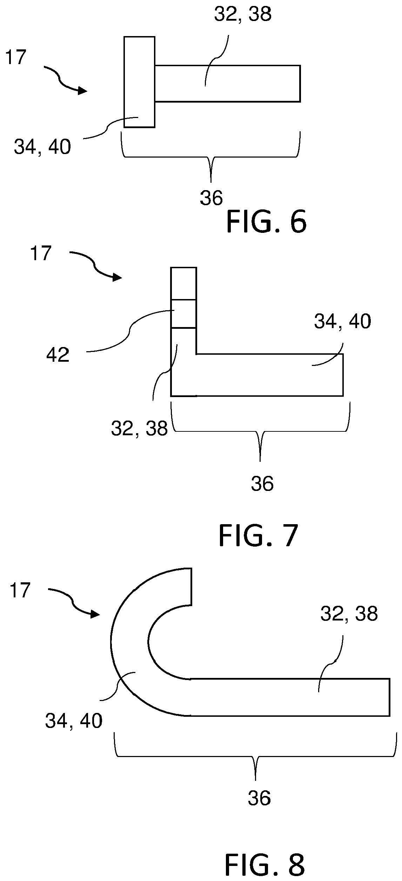

Figs. 6 to 8 show different embodiments of the damping device 17. According to Fig. 6, the damping device 17 is provided by a screw. The screw defines a device body 36 which comprises a proximal section 38 defining a spring element 32 and a distal section 40 defining a mass element 34. Thus, the spring element 32 and the mass element 34 are integrally formed. When mounted to either one of the valves 20, 24, (not shown, cf. Figs. 2 and 3) or to the valve block 11 or to the mounting means 14, the spring element 32 provided by the shaft portion is configured for vibration-conductive coupling of the damping device 17, wherein the mass element 34 defines a free oscillator.

According to the embodiment shown in Fig. 7, the damping device 17 is provided by a device body 36 formed as an L-shaped plate. The device body 36 has a proximal section 38 providing a spring element 32, wherein the proximal section 38 has a through hole 42 configured for attachment to e.g. the valve block 11 (not shown, cf. Figs. 2 and 3). The device body 36 further comprises a distal section 40 providing a mass element 34 which is configured to oscillate when mounted to e.g. the valve block 11, thereby defining a free oscillator.

According to Fig. 8 showing a fourth embodiment of the damping device 17, the damping device 17 comprises a device body 36 provided by a bended plate. The bended plate 36 comprises a proximal section 38 defining a spring element 32 and configured for vibration-conductive coupling to a first valve 20.1 (not shown, cf. Fig. 2). A distal section 40 of the device body 36 is bended and defines a mass element 34. The mass element 34 defines a free oscillator configured to oscillate a frequency associated with the resonant frequency of said first valve 20.1 (not shown, cf. Fig. 2).

### LIST OF REFERENCE SIGNS (PART OF THE DESCRIPTION)

- 1: gearbox control unit
- 4: housing section
- 6: top cover
- 8: electronic control unit
- 10: valve unit
- 11: valve block
- 12: flexible printed circuit
- 14: mounting member, fixation plate assembly
- 16: fixation plate
- 17: damping device
- 18, 18.1: first tuned mass damper
- 18.2: second tuned mass damper
- 18.3: third tuned mass damper
- 19: first row
- 20: solenoid valves of first row
- 20.1: first solenoid valve
- 22: second row
- 24: solenoid valves of second row
- 26: through hole
- 28: screw
- 30: solenoid opening
- 32: spring element
- 34: mass element
- 36: device body
- 37: damping element
- 38: proximal section
- 40: distal section
- 42: through hole in device body

## Claims

1. A valve unit (10) for a gearbox control unit (1) of a commercial vehicle, comprising:
- a valve block (11) for carrying a plurality of valves (20, 24),
- a plurality of electrically actuated valves (20, 24), and
- a mounting member (14) configured to engage the valve block (11) for coupling the plurality of valves (20, 24) to the valve block (11),
**characterized by** a damping device (17) for damping oscillation of at least a first valve (20.1) of the plurality of valves (20, 24) in at least a first spatial direction, the damping device (17) having a spring element (32) for vibration-conductive coupling to said first valve (20.1) and a mass element (34) for oscillating at a frequency associated with the resonant frequency of said first valve (20.1).

2. The valve unit (10) according to claim 1,
wherein the damping device (17) further has a damping element (37) associated to the spring element (32) for dissipating kinetic energy created by the motion of the mass element (34).

3. The valve unit (10) according to any of the preceding claims,
wherein the damping device (17) is configured for damping the first modal frequency of the oscillation of the first valve (20.1).

4. The valve unit (10) according to any of the claims 2 or 3,
wherein the spring element (32) and the damping element (37) are integrally formed by a device body (36).

5. The valve unit (10) according to claim 4,
wherein the device body (36) has a proximal section (38) defining the spring element (32) and the damping element (37), and preferably a distal section (40) facing away from the first valve (20.1) and defining the mass element (34).

6. The valve unit (10) according to claim 5,
wherein the device body (36) is formed as a plate having a plate body defining said proximal section (38) and a free oscillating distal section (40).

7. The valve unit (10) according to claim 4,
wherein the device body (36) has a spring characteristic defining the spring element (32) and a damping characteristic defining the damping element (37).

8. The valve unit (10) according to any of the preceding claims,
wherein the spring element (32) of the damping device (17) is coupled in a vibration-conductive manner to said first valve (20.1) by direct attachment to at least one of the following:
- the valve block (11),
- the first valve (20.1),
- the mounting member (14).

9. The valve unit (10) according to any of the preceding claims,
wherein the mass element (34) has a lower weight than the first valve (20) and/or the valve block (11).

10. The valve unit (10) according to any of the preceding claims,
wherein the damping device (17) comprises a first tuned mass damper (18, 18.1) for damping the oscillation of the first valve (20.1) in the first spatial direction, the first tuned mass damper (18, 18.1) having the spring element (32) and the mass element (34).

11. The valve unit (10) according to claim 10,
wherein the spring element (32) is a first spring element (32) and the mass element (34) is a first mass element (34), the valve unit (10) further comprising:
- a second tuned mass damper (18.2) for damping oscillation in a second spatial direction, the second tuned mass damper (18.2) having a second spring element (32) configured for vibration-conductive coupling to a second valve of the plurality of valves (20, 24) and a second mass element (34) for oscillating in a second spatial direction, and
- a third tuned mass damper (18.3) for damping oscillation in a third spatial direction, the third tuned mass damper (18.3) having a third spring element (32) configured for vibration-conductive coupling to a third valve of the plurality of valves (20, 24) and a third mass element (34) for oscillating in a third spatial direction.

12. The valve unit (10) according to any of the preceding claims,
wherein the damping device (17) has natural frequency in a range of 300Hz-3000Hz.

13. A gearbox control unit (1) of a commercial vehicle, comprising:
- an electronic control unit (8) for providing electric control signals, and
- an electrical actuated valve unit (10) in signal communication with the electronic control unit (8), the valve unit (10) being configured for providing control pressure to a gearbox,
**characterized in that** the valve unit (10) is formed in accordance with at least one of the preceding claims.

14. Use of a damping device (17) for damping the oscillation of a valve unit (10) for a gearbox control unit (1) of a commercial vehicle,
wherein the damping device (17) is configured for damping at least a first valve (20.1) of a plurality of valves (20, 24) of the valve unit (10) in at least a first spatial direction, the damping device (17) being defined by a spring element (32) for vibration-conductive coupling to said first valve (20, 24) and by a mass element (34) for oscillating at a frequency associated to the resonant frequency of said first valve (20.1)

15. Method for damping the oscillation of a valve unit (10) for a gearbox control unit (1) of a commercial vehicle, comprising the steps:
- providing a damping device (17) is configured for damping at least a first valve (20.1) of a plurality of valves (20, 24) of the valve unit (10) in at least a first spatial direction,
wherein the damping device (17) is defined by a spring element (32) and a mass element (34),
- coupling the spring element (32) of the damping device (17) to said first valve (20.1) of the valve unit (10) in a vibration-conductive manner,
- oscillating of the mass element (34) at a frequency associated with the resonant frequency of said first valve (20.1).
